# EUROPÄISCHE PATENTSCHRIFT

(11) **EP 1 306 583 B1**
(45) Veröffentlichungstag und Bekanntmachung des Hinweises auf die Patenterteilung: **21.03.2007**
(21) Anmeldenummer: 02022814.4
(22) Anmeldetag: 12.10.2002
(51) Int. Cl.: F16H 63/30

(54) **Schaltanordnung zum Einlegen des Rückwärtsganges eines Stirnradgetriebes**
Shift mechanism for engaging the reverse gear of a spur gear transmission
Dispositif de commande pour engagement de marche arrière dans une transmission à engrenages

(30) Priorität: 25.10.2001 DE 10154131
(43) Veröffentlichungstag der Anmeldung: 02.05.2003
(73) Patentinhaber: GETRAG Getriebe- und Zahnradfabrik Hermann Hagenmeyer GmbH & Cie KG, 74199 Untergruppenbach (DE)
(72) Erfinder: Nollenberger, Frank, 74399 Walheim (DE)
(74) Vertreter: Steil, Christian

(56) Entgegenhaltungen:
- EP-A- 0 699 854
- DE-A- 19 731 011
- FR-A- 2 805 020
- US-A- 4 601 214
- US-A- 5 119 917
- PATENT ABSTRACTS OF JAPAN Bd. 1997, Nr. 06, 30. Juni 1997 (1997-06-30) -& JP 09 032921 A (FUJI HEAVY IND LTD), 7. Februar 1997 (1997-02-07)
- PATENT ABSTRACTS OF JAPAN Bd. 1997, Nr. 08, 29. August 1997 (1997-08-29) -& JP 09 096361 A (SUZUKI MOTOR CORP), 8. April 1997 (1997-04-08)

## Beschreibung

Die vorliegende Erfindung betrifft eine Schaltanordnung zum Einlegen des Rückwärtsganges eines Stirnradgetriebes für Kraftfahrzeuge gemäß dem Oberbegriff des Anspruchs 1, wie sie aus Patent Abstracts of Japan, Band 1997, Nr. 6, 30. Juni 1997 (JP 09 032921 A) bekannt ist, wobei das Stirnradgetriebe mehrere synchronisierte Vorwärtsgänge und den Rückwärtsgang aufweist, mit einer Schaltwelle, die für Wählbewegungen in axialer Richtung verschiebbar und für Schaltbewegungen verdrehbar ist, wobei ein Schaltfingerelement mit der Schaltwelle verbunden ist, das je nach gewählter Axialstellung ein jeweiliges Schaltelement zum Betätigen von einer oder zwei Schaltkupplungen in Umfangsrichtung mitnimmt, und wenigstens einem an der Schaltwelle gelagerten Bremselement, das so angeordnet ist, daß es bei einer Betätigung einer Schaltkupplung zum Einlegen des Rückwärtsganges eine andere Schaltkupplung ansynchronisiert, um den Rückwärtsgang bei einer möglichst geringen Differenzdrehzahl an der zugeordneten Schaltkupplung einlegen zu können.

Derartige Schaltanordnungen sind allgemein bekannt und werden auch als Rückwärtsgang-Bremsen bezeichnet.

Die Mehrzahl der bekannten Rückwärtsgang-Bremsen, die mittels Ansynchronisieren eines Vorwärtsganges funktionieren, streuen sehr stark in ihrer Wirkungsweise. Dies ist dadurch bedingt, daß das Ansynchronisieren in der Regel abhängig von einem bestimmten Weg oder einer bestimmten Zeit erfolgt. Daher ist die Ansynchronisierungsfunktion stark toleranzabhängig und in Grenzlagen oft nicht ausreichend gewährleistet. Die Bremswirkung ist häufig zu gering, was zum Kratzen beim Einlegen des Rückwärtsganges führt, oder zu stark, was zu übermäßig hohen Schaltkräften beim Einlegen des Rückwärtsganges führt.

Die meisten der bekannten Rückwärtsgang-Bremsen sind zudem sehr aufwendig und mit vielen, oftmals komplizierten Teilen versehen. Der Platzbedarf und das Gewicht der bekannten Bremsen ist deshalb verhältnismäßig hoch.

Ähnliche Schalteinrichtungen, wie sie aus dem eingangs genannten Dokument Patent Abstracts of Japan, Band 1997, Nr. 6, 30. Juni 1997 (JP 09 032921 A) bekannt geworden ist, sind bekannt aus Patent Abstracts of Japan, Band 1997, Nr. 08, 29. August 1997 (JP 09 096361A), bzw. aus dem Dokument FR-A-2805020 A1.

Vor diesem Hintergrund besteht das der Erfindung zugrunde liegende Problem darin, eine Schaltanordnung zum Einlegen des Rückwärtsganges eines Stirnradgetriebes derart weiterzubilden, daß die Wirkungsweise weniger stark streut und die Anordnung insgesamt konstruktiv möglichst einfach ist und verringerte Schaltkräfte ermöglicht.

Diese Aufgabe wird durch eine Schaltanordnung zum Einlegen des Rückwärtsganges eines Stirnradgetriebes für Kraftfahrzeuge gemäß Patentanspruch 1 gelöst.

Dabei ist das Bremselement an der Schaltwelle verdrehbar gelagert und zwischen der Schaltwelle und dem Bremselement ist eine kraftschlüssige Halteeinrichtung angeordnet ist, so daß das Ansynchronisieren mittels der kraftschlüssigen Halteeinrichtung kraftgesteuert erfolgt, bis die Halteeinrichtung gelöst wird.

Durch diese Maßnahme ist es möglich, die Wirkung des Ansynchronisierens und damit die Bremswirkung kraftgesteuert erfolgen zu lassen, bei einfachem konstruktivem Aufbau.

Die Bremswirkung ist folglich weg- und toleranzunabhängig. Es stellt sich immer eine definierte Bremskraft und damit eine gleichbleibende Schaltkraft ein.

Die Konstruktion kommt mit sehr wenigen Teilen aus. Der Platzbedarf und das Gewicht der Schaltanordnung sind gering.

Von Vorzug ist es, wenn das Bremselement so angeordnet ist, daß es beim Einlegen des Rückwärtsganges die Schaltkupplung für den zweiten Gang ansynchronisiert.

Diese Maßnahme ist insbesondere dann von Vorteil, wenn der Rückwärtsgang in der gleichen Schaltgasse liegt wie der fünfte Gang eines 5-Gang-Getriebes. Generell ist es von Vorteil, wenn die Ansynchronisierung-Schaltkupplung in die gleiche Schaltrichtung betätigt wird wie die Schaltkupplung für den Rückwärtsgang (z.B. Ansynchronisieren des 4. Ganges).

Ferner ist es von Vorzug, wenn die Schaltanordnung wenigstens ein Sperrelement aufweist, das das Betätigen von Schaltelementen mechanisch sperrt, die aufgrund der jeweiligen axialen Position der Schaltwelle nicht angewählt sind.

Auf diese Weise wird verhindert, daß zwei Gänge gleichzeitig eingelegt werden, was unter Last zu einer Zerstörung des Stirnradgetriebes führt.

Dabei ist es von besonderem Vorzug, wenn das Sperrelement axial verschiebbar an einem Gehäuse gelagert ist und bei Axialbewegungen der Schaltwelle mitgenommen wird.

Hierdurch kann die Sperrwirkung konstruktiv leicht realisiert werden, indem beispielsweise das - gegenüber der Schaltwelle nicht verdrehbare - Sperrelement in Mitnahmenuten der Schaltelemente greift, in die auch das Schaltfingerelement greift.

Gemäß einer weiteren bevorzugten Ausführungsform weist das Sperrelement eine Nut auf, um das Betätigen der Ansynchronisierungsschaltkupplung zuzulassen.

Mit anderen Worten werden die bei angewähltem Rückwärtsgang nicht angewählten Schaltelemente zwar mechanisch gesperrt, eine Ansynchronisierung der anderen Schaltkupplung wird jedoch durch die Nut ermöglicht.

Dabei ist es von besonderem Vorzug, wenn die Nut so dimensioniert ist, daß das Herstellen des Formschlusses der Ansynchronisierungs-Schaltkupplung ausgeschlossen ist, wenn die Schaltkupplung für den Rückwärtsgang angewählt ist.

Mit anderen Worten hat die Nut eine solche Tiefe, daß ein Ansynchronisieren und folglich eine Bremswirkung zwar möglich sind, jedoch sichergestellt wird, daß ein gleichzeitiges Einlegen des Rückwärtsganges und des Ansynchronisierungs-Ganges ausgeschlossen ist.

Gemäß einer weiteren bevorzugten Ausführungsform ist das Bremselement zwischen Schaltfingerelement und dem Sperrelement an der Schaltwelle gelagert.

Auf diese Weise ist es konstruktiv einfach möglich, das Bremselement in axialer Richtung mit der Schaltwelle mitzunehmen. Ferner können das Schaltfingerelement und das Sperrelement gegebenenfalls zur Realisierung der Halteeinrichtung mitverwendet werden.

Auch ist es von Vorteil, wenn die Schaltelemente in axialer Richtung eine Reihe bilden und wenn das Schaltelement für den Rückwärtsgang und das Schaltelement für den Gang, der beim Einlegen des Rückwärtsganges ansynchronisiert wird, an axial entgegengesetzten Enden der Reihe liegen.

Hierdurch kann erreicht werden, daß das Bremselement nur dann in Eingriff mit einem der Schaltelemente gelangt, wenn die Schaltgasse für den Rückwärtsgang angewählt ist. In allen anderen Wählpositionen kann das Bremselement keine Funktion ausüben.

Gemäß einer weiteren bevorzugten Ausführungsform weist die Schaltanordnung Rückstellmittel auf, die das Bremselement nach dem Ansynchronisieren und dem Lösen der Halteeinrichtung wieder in die Ausgangsstellung zurückstellen.

Hierdurch werden Verklemmungen vermieden.

Gemäß einer bevorzugten Ausführungsform greifen die Rückstellmittel an dem Bremselement an.

Bei einer weiteren bevorzugten Ausführungsform greifen die Rückstellmittel an dem Ansynchronisierungs-Schaltelement oder im Bereich einer Verbindung zwischen dem Ansynchronisierungs-Schaltelement und der Ansynchronisierungs-Schaltkupplung an.

Bei dieser Ausführungsform erfolgt die Rückstellung, indem das Schaltelement zur Betätigung der Ansynchronisierungs-Schaltkupplung rückgestellt wird, wobei das Bremselement mitgenommen wird, um in die Ausgangsstellung zu gelangen.

Dies bedingt, daß das Bremselement so ausgebildet ist, daß es bei einer Bewegung entgegen der Ansynchronisierungs-Bewegung mitgenommen wird.

Von besonderem Vorzug ist es dabei, wenn die Rückstellmittel durch eine Schaltstangenarretierung gebildet sind.

Eine Schaltstange ist ein übliches Verbindungselement zwischen einem Schaltelement und einer Schaltkupplung. Häufig beinhalten derartige Schaltstangen auch Arretierungen, um einmal angewählte Positionen beizubehalten. Durch geeignete Profilierung dieser Arretierungsmittel ist es möglich, die Schaltstangenarretierung als Rückstellmittel zu verwenden.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Ansicht eines Antriebsstranges eines Kraftfahrzeuges, das ein Stirnradgetriebe mit einer erfindungsgemäßen Schaltanordnung aufweist;
- Fig. 2: eine schematische Längsschnittansicht einer erfindungsgemäßen Schaltanordnung;
- Fig. 3: eine Schnittansicht entlang der Linie III-III von Fig. 2;
- Fig. 4: eine Schnittansicht entlang der Linie IV-IV von Fig. 2;
- Fig. 5: eine der Fig. 3 entsprechende Ansicht einer alternativen Ausführungsform der erfindungsgemäßen Schaltanordnung;
- Fig. 6: eine Ansicht des Details VI in Fig. 5;
- Fig. 7: eine der Fig. 3 entsprechende Ansicht einer weiteren alternativen Ausführungsform der erfindungsgemäßen Schaltanordnung; und
- Fig. 8: eine der Fig. 3 entsprechende Ansicht einer weiteren Ausführungsform der erfindungsgemäßen Schaltanordnung.

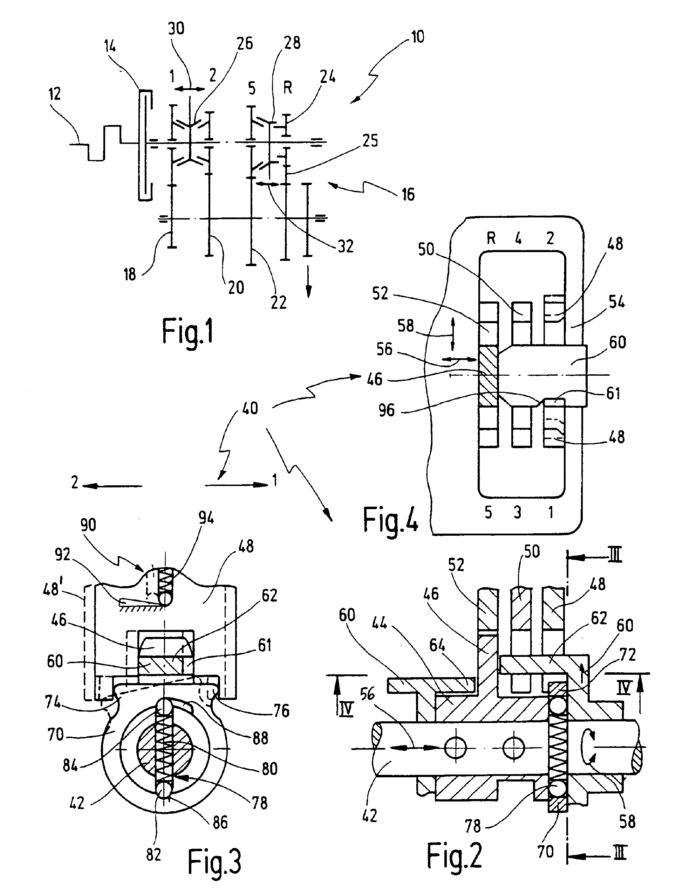

In Fig. 1 ist ein Antriebsstrang eines Kraftfahrzeuges generell mit 10 bezeichnet.

Der Antriebsstrang 10 beinhaltet einen Verbrennungsmotor 12, eine Anfahr- und Trennkupplung 14 sowie ein handgeschaltetes Stirnradgetriebe 16.

Das Stirnradgetriebe 16 ist von Hand schaltbar, läßt sich jedoch auch als automatisiertes Schaltgetriebe ausführen. In diesem Fall würden eine Steuerung des Motors, die Betätigung der Anfahr- und Trennkupplung 14 sowie die Betätigung des Stufengetriebes 16 mittels geeigneter, aufeinander abgestimmter Aktuatoren erfolgen.

Das Stufengetriebe 16 weist mehrere Radsätze auf, von denen ein Radsatz für den ersten Gang bei 18 gezeigt ist, ein Radsatz für den zweiten Gang bei 20, ein Radsatz für den fünften Gang bei 22 und ein Radsatz für den Rückwärtsgang bei 24.

Die Radsätze für den dritten und den vierten Gang sind aus Gründen einer übersichtlicheren Darstellung nicht gezeigt.

Die gezeigten qualitativen Übersetzungsverhältnisse (Durchmesser der Zahnräder) sind aus Übersichtlichkeitsgründen ebenfalls nicht richtig dargestellt, zumal es hierauf vorliegend nicht ankommt.

Der Radsatz 20 für den zweiten Gang läßt sich mittels einer synchronisierten Schaltkupplung 26 schalten. Der Radsatz 24 für den Rückwärtsgang läßt sich mittels eines Schieberades 25 zur Drehrichtungsumkehr schalten. Mit einer synchronisierten Schaltkupplung läßt sich der 5. Gang schalten.

Zum Schalten der Schaltkupplung 26 und einer benachbarten, nicht näher bezeichneten Schaltkupplung für den ersten Gang dient eine Schaltmuffe 30. Entsprechend ist eine Schaltmuffe 32 zum Betätigen der Schaltkupplung 28 und einer benachbarten Schaltkupplung für den fünften Gang vorgesehen. Um ein Kratzen beim Einlegen des Rückwärtsganges bei noch vorhandenen Differenzdrehzahlen zu vermeiden, wird beim Einlegen des Rückwärtsganges R die Schaltkupplung 26 des zweiten Ganges ansynchronisiert. Durch das Ansynchronisieren wird die Drehzahldifferenz an der Schaltkupplung 28 verringert, im Idealfall bis auf Null. Auf diese Weise ist es möglich, für den Rückwärtsgang auf eine separate aufwendige Synchronisierung zu verzichten.

Die Schaltkupplung 28 kann folglich beispielsweise als einfache Klauenkupplung ausgebildet sein.

In den Figuren 2 bis 4 ist eine Schaltanordnung zum Einlegen des Rückwärtsganges eines Stirnradgetriebes für Kraftfahrzeuge gezeigt, wie sie in dem Stufengetriebe 16 verwendet wird.

Die Schaltanordnung 40 weist eine Schaltwelle 42 auf, an der ein Schaltfingerelement 44 verdrehfest und axial unverschieblich gelagert ist. Das Schaltfingerelement 44 kann auch einstückig mit der Schaltwelle 42 ausgebildet sein.

An dem Schaltfingerelement 44 ist ein Schaltfinger 46 vorgesehen, der dazu ausgelegt ist, jeweils in eines einer Mehrzahl von Schaltelementen 48, 50, 52 zu greifen.

Das Schaltelement 48 ist formschlüssig mit der Schaltmuffe 30 verbunden und dient zum Einlegen des ersten und des zweiten Ganges. Das Schaltelement 50 ist mit einer nicht näher bezeichneten Schaltmuffe zum Einlegen des dritten und vierten Ganges verbunden. Das Schaltelement 52 ist zum Einlegen des 5. Ganges mit der Schaltmuffe 32 und zum Einlegen des Rückwärtsganges mit einer Schaltgabel für den 5. Gang über einen Mitnehmer formschlüssig verbunden.

Die Schaltelemente 48, 50, 52 sind axial in einer Reihe angeordnet. Das Schaltelement 50 ist zwischen den Schaltelementen 48, 52 angeordnet.

Die Schaltelemente 48, 50, 52 sind in an sich üblicher Weise in einer Kulisse 54 (H-Kulisse) geführt.

Nach herkömmlicher begrifflicher Übereinkunft erfolgen bei der Schaltanordnung 40 sogenannte Wählbewegungen durch eine Axialbewegung 56 der Schaltwelle 42. Sogenannte Schaltbewegungen erfolgen durch eine Drehbewegung 58 der Schaltwelle 42.

Die entsprechenden Linearbewegungen der Schaltelemente 48, 50, 52 sind ebenfalls durch die Bezugsziffern 56, 58 in Fig. 4 gezeigt.

Die Schaltanordnung 40 weist ferner ein Sperrelement 60 auf. Das Sperrelement 60 dient dazu, die jeweils nicht angewählten Schaltelemente 48, 50, 52 gegenüber Schaltbewegungen 58 zu sperren.

Zu diesem Zweck ist das Sperrelement 60 axial verschieblich an einem nicht näher dargestellten Gehäuse des Stufengetriebes 16 gelagert. Dabei ist das Sperrelement 60 so angeordnet, daß es von Axialbewegungen 56 der Schaltwelle 42 mitgenommen wird. Das Sperrelement 60 ist in Drehbewegungsrichtung 58 hingegen unbeweglich ausgebildet.

Das Sperrelement 60 weist einen ersten Arm 62 auf, der in axialer Richtung auf einer Seite des Schaltfingers 46 angeordnet ist, sowie einen zweiten Arm 64, der auf der anderen Seite des Schaltfingers 46 angeordnet ist.

Wie es am besten in Fig. 3 zu erkennen ist, weisen die Mitnahmeelemente jeweils eine untere breitere Nut zur Aufnahme des zweiten Arms 64 und eine davon ausgehende schmalere Nut zur Aufnahme des ersten Armes 62 auf.

In der Darstellung der Fig. 2 ist zu sehen, daß das Schaltfingerelement 46 so positioniert ist, daß das Schaltelement 52 für den Rückwärtsgang und den fünften Gang angewählt ist. Die Schaltelemente 48, 50 sind durch den ersten Arm 62 gesperrt.

Die Arme 62, 64 sind beide Teil des Sperrelementes 60 und sind formschlüssig mit dem Schaltfingerelement 44 gekoppelt, so daß das Sperrelement 60 bei Axialbewegungen des Schaltfingerelementes 44 mitgenommen wird.

Zwischen dem Schaltfingerelement 44 und dem ersten Arm 62 des Sperrelementes 60 ist ein Bremselement 70 angeordnet. Genauer gesagt liegt das Bremselement 70 an dem Sperrelement 60 an, und der Arm 62 ist gekröpft ausgebildet und erstreckt sich über das Bremselement 70.

Das Bremselement 70 ist in axialer Richtung von dem Schaltfinger 46 so beabstandet, daß es bei angewähltem Rückwärtsgang R in Axialrichtung auf der Höhe des Schaltelementes 48 liegt.

Das Bremselement 70 ist als Ringelement ausgebildet, das verdrehbar an der Schaltwelle 42 gelagert ist, gegenüber der Schaltwelle 42 jedoch axial unbeweglich zwischen den Elementen 44, 60 gehalten ist.

Das Bremselement 70 weist einen Kopf 72 auf, der in die breitere Nut des Schaltelementes 48 eingreift.

Der Kopf 72 des Bremselementes 70 weist eine Bremsnase 74 auf, die an einer Innenflanke der Nut des Mitnahmeelementes 48 anliegt. Der Kopf 72 weist ferner eine Sicherungsnase 76 auf, die an einer gegenüberliegenden Flanke der Nut anliegt.

Zwischen dem Bremselement 70 und der Schaltwelle 42 wirkt eine kraftschlüssige Halteeinrichtung 78.

In der dargestellten Ausführungsform ist die kraftschlüssige Halteeinrichtung 78 gebildet durch ein Rastierelement mit einer die Schaltwelle 42 radial durchsetzenden Feder 80 und zwei radial gegenüberliegend angeordneten Kugeln 82, 84. Anstelle von Kugeln können auch Kegelbolzen als Rastierelemente verwendet werden.

An einem Innenumfangsabschnitt des Bremselementes 70 ist eine Vertiefung 86 vorgesehen, die an die Form der Kugel (des Rastierelementes) 82 angepaßt ist.

Gegenüberliegend ist am Innenumfang des Bremselementes 70 eine Umfangsnut 88 vorgesehen, deren Form an die Kugel 84 angepaßt ist.

In der in Fig. 3 gezeigten Ausgangsposition ist das Bremselement 70 folglich auf die Schaltwelle 42 gerastet und wird bei Drehbewegungen der Schaltwelle 42 aufgrund des Kraftschlusses mitgenommen, der durch die Feder 80 erzeugt wird.

Im Betrieb wird die Schaltwelle 42 mittels eines handschaltbaren Ganghebels im Inneren der Karosserie des Kraftfahrzeuges bewegt. Zunächst erfolgt durch eine Axialbewegung der Schaltwelle 42 eine Anwahl einer Schaltgasse bzw. eines Schaltelementes 48, 50, 52. Anschließend erfolgt durch Verdrehen der Schaltwelle 42 der eigentliche Schaltvorgang, bei dem eine zugeordnete Schaltkupplung betätigt wird, mit der ein Formschluß zwischen einem jeweiligen Radsatz 18 - 24 und einer Welle des Stufengetriebes 16 erzielt wird.

Zum Einlegen beispielsweise des ersten Ganges wird die Schaltwelle 42 so verschoben, daß sich der Schaltfinger 46 in axialer Richtung auf Höhe des Mitnehmers 48 befindet. In dieser Stellung sind die Mitnehmer 50, 52 durch den zweiten Arm 64 des Sperrelementes 60 blockiert. Anschließend erfolgt der Schaltvorgang, indem die Schaltwelle 42 verdreht wird, so daß der Schaltfinger 46 den Mitnehmer 48 in Richtung 58 mitnimmt. Der Mitnehmer 48 bewegt über geeignete Verbindungsmittel, in der Regel eine Schaltstange oder ähnliches, die zugeordnete Schaltmuffe 30, bis der Formschluß an der zugeordneten Schaltkupplung des ersten Ganges erzielt ist.

Zum Einlegen des Rückwärtsganges erfolgt vor dem Herstellen des Formschlusses am Schieberad 25 ein Ansynchronisieren mittels des zweiten Ganges.

Nachdem die Schaltgasse für den Rückwärtsgang angewählt ist, befindet sich der Schaltfinger 46 in der in den Figuren 2 - 4 gezeigten Position, nämlich in axialer Richtung auf Höhe des Schaltelementes 52. In dieser Axialposition der Schaltwelle 42 befindet sich das Bremselement 70 in axialer Richtung auf der Höhe des Schaltelementes 48.

Beim Einleiten des Schaltvorganges nimmt der Schaltfinger 46 den Mitnehmer 52 mit, um die Schaltgabel für den Rückwärtsgang zu betätigen. Bis zum Angreifen der Verzahnungen ist jedoch ein vorbestimmter Weg zurückzulegen.

Dieser Weg wird zum Ansynchronisieren des zweiten Ganges benutzt.

Denn bei der eingeleiteten Drehbewegung 58 wird das Bremselement 70 mittels der kraftschlüssigen Halteeinrichtung 78 mitgenommen (wie es in Fig. 3 gestrichelt dargestellt ist). Die Bremsnase 74 nimmt folglich das Schaltelement 48 in Richtung des Einlegens des zweiten Ganges mit. Dies ist dadurch möglich, daß an dem ersten Arm 62 eine zum ersten Gang hinweisende Nut 61 bestimmter Tiefe vorgesehen ist. Die Nuttiefe ist in der Regel kleiner als der vorbestimmte Weg, der bis zum Berühren der Verzahnungen des Rückwärtsganges zurückzulegen ist.

Durch das Mitnehmen des Schaltelementes 48 wird die Schaltkupplung 26 ansynchronisiert, d.h. deren Reibeinrichtung wird belastet, ein Formschluß wird jedoch nicht hergestellt.

Durch die Belastung der Reibeinrichtung erfolgt eine Verringerung der Differenzdrehzahl an der Schaltkupplung 26 und folglich auch an der Schaltkupplung 28.

Die Anpreßkraft ist gebildet durch die Haltekraft der Halteeinrichtung 78. Diese Haltekraft setzt sich im vorliegenden Fall zusammen aus der Federkraft der Feder 80, den Konturen von Vertiefung 86 und Nut 88 sowie der Reibung der Kugeln 82, 84 in der Vertiefung 86 bzw. der Nut 88.

Eine Gegenkraft wird aufgebaut durch die Anpreßkraft der Synchronisierung, die Reibung an den Verbindungsmitteln zwischen Schaltelement 48 und Schaltkupplung 26 und eine eventuelle Kraft einer Schaltstangenarretierung (siehe unten).

Sobald die Gegenkraft so hoch ist wie die Anpreßkraft, wird die Halteeinrichtung 78 gelöst (die Rastierelemente 82, 84 rasten aus der Vertiefung 86 bzw. der Nut 88 aus, und das Bremselement 70 wird frei). Ab diesem Zustand erfolgt keine Anpreßkraft mehr auf die Reibeinrichtung der Schaltkupplung 26, der Ansynchronisierungsvorgang ist beendet. Im Idealfall ist die Differenzdrehzahl bereits Null. Die nicht-synchronisierte Schaltkupplung 28 des Rückwärtsganges R wird durchgeschaltet, der Formschluß ohne Kratzen erzeugt.

Die Tiefe der Nut 61 ist so bemessen, daß bei einem Versagen der Schaltkupplung 26 (beispielsweise durch Spaltmaßverlust bedingt durch Verschleiß der Synchronbeläge) ein Einschalten des zweiten Ganges in jedem Fall ausgeschlossen ist. Dies erfolgt, indem das Schaltelement 48 auf den Grund der Nut 61 auftrifft.

Anschließend wird das Schaltelement 48 wieder in die Ausgangsposition zurückgebracht, so daß das Bremselement 70 wieder einrastet bzw. die Halteeinrichtung 78 wieder in Kraftschluß gerät. Dies erfolgt durch eine in Fig. 3 schematisch dargestellte Rückstelleinrichtung 90.

Die in Fig. 3 dargestellte Rückstelleinrichtung 90 weist eine gehäusefest angeordnete Keilfläche 92 auf und ein Federelement 94, das an dem Schaltelement 48 gelagert ist. Bei einer Auslenkung des Schaltelementes 48 in eine Ansynchronisierungsposition (schematisch bei 48' gezeigt) wird das Federelement 94 mittels der Keilfläche 92 belastet. Sobald die Halteeinrichtung 78 nach dem Ansynchronisierungsvorgang gelöst ist, wird das Schaltelement 48 durch das Federelement 94 wieder in die Ausgangsstellung zurück verbracht. Dabei nimmt es das Bremselement 70 mit, so daß dieses wieder in die Ausgangsstellung einrastet.

Die Rückstelleinrichtung 90 kann auch gebildet sein durch eine nicht näher dargestellte Schaltstangenarretierung, wie sie in vielen Schaltanordnungen für Kraftfahrzeuggetriebe ohnehin vorhanden ist.

Zusätzlich oder alternativ hierzu kann ein Rückstellen des freien Bremselementes 70 auch durch eine Rückstellfase 96 im Bereich der Nut 61 des Sperrelementes 60 erfolgen.

Wenn bei einem Auslegen des Rückwärtsganges das Bremselement 70 noch frei ist, wird es bei einer anschließenden Wählbewegung in Richtung hin zu einer Mittelstellung durch die Rückstellfase 96 automatisch wieder in die Grundposition gezogen, in der die Halteeinrichtung 78 einen Kraftschluß zur Schaltwelle 42 erzeugt.

Für den Fall, daß sich das Bremselement 70 beim Auslegen des Rückwärtsganges R bereits in der Mittelposition befindet, wird durch die Sicherungsnase 76 verhindert, daß sich das Bremselement 70 verdreht. Folglich ist gewährleistet, daß das Bremselement 70 in der Halteposition verbleibt und die Halteeinrichtung 78 den Kraftschluß erzeugen kann (einrasten kann).

Bei dem vorliegenden Schaltschema liegt der fünfte Gang in derselben Gasse wie der Rückwärtsgang R. Bei der Schaltung in den fünften Gang befindet sich damit der Kopf 72 des Bremselementes 70 ebenfalls mit dem Schaltelement 48 in Eingriff. Ein Ansynchronisieren eines weiteren Vorwärtsganges (in diesem Fall des ersten Ganges) ist bei dem Schaltvorgang in den fünften Gang jedoch nicht möglich, da auf dieser Seite keine Nut in dem Sperrelement 60 vorhanden ist. Folglich ist der erste Gang blockiert. Allerdings muß dabei die Haltekraft der Halteeinrichtung (die Arretierkraft der Rastelemente) überwunden werden. Diese Kraft summiert sich zu der Schaltkraft des fünften Ganges und ist an sich nicht erwünscht. Damit diese Kraft so gering wie möglich bleibt, wird der Weg des Rastierelementes 84 an dem Bremselement 70 in Richtung des fünften Ganges durch die Umfangsnut 88 freigegeben. Damit ist beim Schalten in den fünften Gang nur eine leichte Gegenkraft zu überwinden.

Diese Maßnahme wäre nicht erforderlich, wenn der Rückwärtsgang R in einer separaten Gasse liegen würde, wie z.B. bei einem 6-Gang-Getriebe.

Um jedoch eine Positionierung des Bremselementes 70 relativ zu der Schaltwelle 42 auch zu gewährleisten, wenn das Schaltelement 50 oder das Schaltelement 48 angewählt ist (zum Schalten des ersten oder zweiten bzw. dritten oder vierten Ganges), wird das Bremselement 70 mittels des zweiten Rastierelementes 82 in der dazu passenden Vertiefung 86 gehalten. Denn ansonsten könnte sich das Bremselement 70 relativ zu der Schaltwelle 42 undefiniert verdrehen, und ein Einspuren wäre nicht mehr möglich. Auch bei Erschütterungen im Getriebe bleibt damit das Bremselement in der vorgesehenen Halteposition stehen.

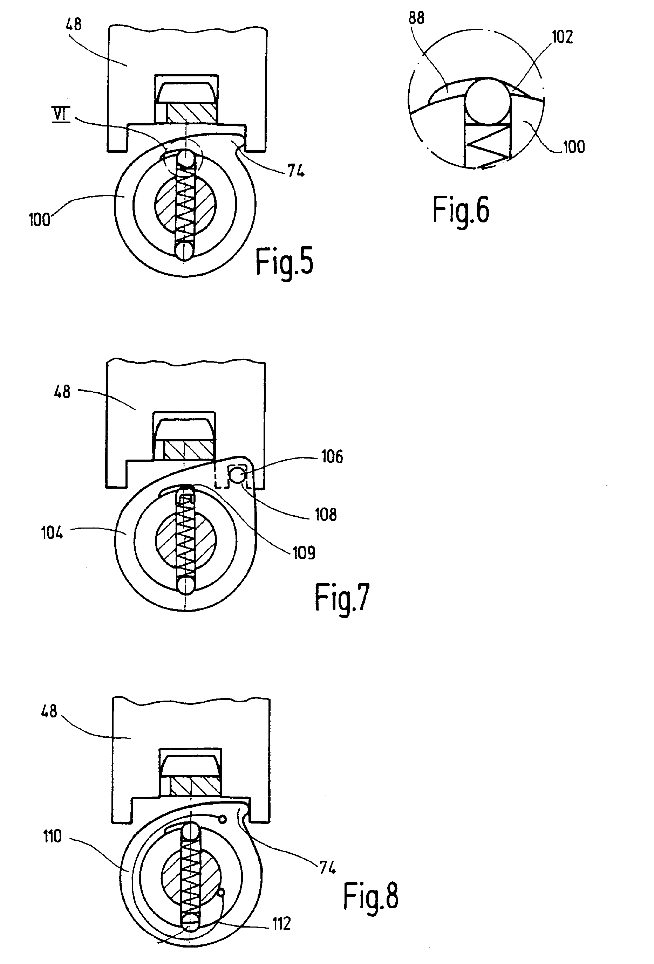

Die Figuren 5 bis 8 zeigen alternative Ausführungsformen von Schaltanordnungen. Bei den weiteren Ausführungsformen handelt es sich im wesentlichen um Modifikationen, so daß auf die obige Beschreibung der Ausführungsform der Figuren 2 - 4 vollumfänglich Bezug genommen wird. Lediglich, soweit sich Unterschiede ergeben, wird dies jeweils ausdrücklich erwähnt.

So ist bei der Ausführungsform der Figuren 5 und 6 ein alternatives Bremselement 100 vorgesehen, das keine Sicherungsnase 76 aufweist. Die Seite des ersten Ganges des Schaltelements 48 wird folglich nicht als Verdrehsicherung verwendet. Durch eine geeignete Kontur in dem Bremselement 100 wird jedoch sichergestellt, daß das Bremselement 100 relativ zu der Schaltwelle 42 durch die Kraft der Rastelemente in die neutrale Halteposition zurückgestellt wird. Dies ist insbesondere in Fig. 6 erkennbar, wo eine Rückstellnut 102 schematisch angedeutet ist.

Bei der Ausführungsform der Fig. 7 ist ein alternatives Bremselement 104 gezeigt, das einen Mitnehmerstift 106 aufweist, der in eine dafür vorgesehene Nut 108 des Schaltelementes 48 greift. Alternativ hierzu kann der Stift 106 auch in die ohnehin vorhandene Mitnehmernut des Schaltelementes 48 eingreifen. Ferner ist in Fig. 7 schematisch angedeutet, daß statt einer Rastierkugel 82 auch ein kegeliges Rastierelement (Kegelbolzen) 109 verwendbar ist.

In Fig. 8 schließlich ist eine weitere alternative Ausführungsform eines Bremselementes 110 gezeigt.

Auch bei dieser Ausführungsform wird die Seite des ersten Ganges des Schaltelementes 48 nicht zur Verdrehsicherung verwendet, das Bremselement 110 weist folglich keine Sicherungsnase 76 auf. Durch eine Rückstellfeder 112, die einerseits an dem Bremselement 110 und andererseits an der Schaltwelle 42 angreift, wird sichergestellt, daß das Bremselement 110 relativ zu der Schaltwelle 42 in die neutrale Halteposition zurückgestellt wird.

Die erfindungsgemäße Anordnung eines Bremselementes an einer Schaltwelle ist bei einer Vielzahl von unterschiedlichen Schaltanordnungen für unterschiedliche Getriebe möglich. Mit anderen Worten ist die Konstruktion nicht auf eine bestimmte Schaltung abgestimmt. Daher läßt sich die erfindungsgemäße Schaltanordnung auf unterschiedliche Getriebe anwenden, beispielsweise durch Wahl unterschiedlicher Federn 80 kann eine Anpassung an andere Gegebenheiten/Anforderungen erfolgen.

Prinzipiell ist auch eine Verwendung bei 6-Gang-Getrieben und Getrieben mit mehr Gängen möglich, sowie eine Verwendung bei einem anderen Schaltschema, beispielsweise mit einem Rückwärtsgang vorne links neben dem ersten Gang. In diesem Fall würde zur Ansynchronisierung bspw. der 5. Gang verwendet werden.

Die Ansynchronisierungswirkung ist generell kraftgesteuert, d.h. weg- und toleranzunabhängig. Die Konstruktion ist einfach und kommt mit wenigen Teilen aus, bei insgesamt geringem Platzbedarf und geringem Gewicht.

## Patentansprüche

1. Schaltanordnung (40) zum Einlegen des Rückwärtsganges (R) eines Stirnradgetriebes (16) für Kraftfahrzeuge, das mehrere synchronisierte Vorwärtsgänge (1-5) und den Rückwärtsgang (R) aufweist, mit einer Schaltwelle (42), die für Wählbewegungen (56) in axialer Richtung verschiebbar und für Schaltbewegungen (58) verdrehbar ist, wobei ein Schaltfingerelement (44) mit der Schaltwelle (42) verbunden ist, das je nach gewählter Axialstellung ein jeweiliges Schaltelement (48, 50, 52) zum Betätigen von einer oder zwei Schaltkupplungen (26, 28) in Umfangsrichtung mitnimmt, und wenigstens einem an der Schaltwelle (42) gelagerten Bremselement (70), das so angeordnet ist, daß es bei einer Betätigung einer Schaltkupplung (28) zum Einlegen des Rückwärtsganges (R) eine andere Schaltkupplung (26) ansynchronisiert, um den Rückwärtsgang (R) bei einer möglichst geringen Differenzdrehzahl an der zugeordneten Schaltkupplung (28) einlegen zu können, wobei der Rückwärtsgang (R) in derselben Schaltgasse liegt wie eine weitere Gangstufe (5), wobei das Bremselement (70; 100; 104; 110) an der Schaltwelle (42) verdrehbar gelagert ist und daß zwischen der Schaltwelle (42) und dem Bremselement (70; 100; 104; 110) eine kraftschlüssige Halteeinrichtung (78) angeordnet ist, so daß das Ansynchronisieren mittels der kraftschlüssigen Halteeinrichtung (78) kraftgesteuert erfolgt, bis die Halteeinrichtung (78) gelöst wird, wobei die Halteeinrichtung (78) durch eine Rastiereinrichtung (78) gebildet ist, mittels der das Bremselement (70) auf die Schaltwelle (42) gerastet ist und die ein Rastierelement (84) aufweist,
**dadurch gekennzeichnet, daß**
an einem Innenumfangsabschnitt des Bremselementes (70; 100; 104; 110) eine Umfangsnut (88) vorgesehen ist, deren Form an das Rastierelement (84) angepaßt ist, derart, daß beim Schalten in die weitere Gangstufe (5) nur eine leichte Gegenkraft zu überwinden ist.

2. Schaltanordnung nach Anspruch 1, **dadurch gekennzeichnet, daß** das Bremselement (70; 100; 104; 110) so angeordnet ist, daß es beim Einlegen des Rückwärtsganges (R) die Schaltkupplung (26) für den 2. Gang ansynchronisiert.

3. Schaltanordnung nach Anspruch 1 oder 2, **dadurch gekennzeichnet, daß** die Schaltanordnung (40) wenigstens ein Sperrelement (60) aufweist, das das Betätigen von Schaltelementen (48, 50, 52) mechanisch sperrt, die aufgrund der jeweiligen axialen Position der Schaltwelle (42) nicht angewählt sind.

4. Schaltanordnung nach Anspruch 3, **dadurch gekennzeichnet, daß** das Sperrelement (60) axial verschiebbar an einem Gehäuse gelagert ist und bei Axialbewegungen der Schaltwelle (42) mitgenommen wird.

5. Schaltanordnung nach Anspruch 3 oder 4, **dadurch gekennzeichnet, daß** das Sperrelement (60) eine Nut (61) aufweist, um das Betätigen der Ansynchronisierungs-Schaltkupplung (26) zuzulassen.

6. Schaltanordnung nach Anspruch 5, **dadurch gekennzeichnet, daß** die Nut (61) so dimensioniert ist, daß das Herstellen des Formschlusses der Ansynchronisierungs-Schaltkupplung (26) ausgeschlossen ist, wenn die Schaltkupplung (28) für den Rückwärtsgang (R) angewählt ist.

7. Schaltanordnung nach einem der Ansprüche 3 - 6, **dadurch gekennzeichnet, daß** das Bremselement (70; 100; 104; 110) zwischen dem Schaltfingerelement (44) und dem Sperrelement (60) an der Schaltwelle (42) gelagert ist.

8. Schaltanordnung nach einem der Ansprüche 1 - 7, **dadurch gekennzeichnet, daß** die Schaltelemente (48, 50, 52) in axialer Richtung eine Reihe bilden und daß das Schaltelement (52) für den Rückwärtsgang (R) und das Schaltelement für den Gang (2), der beim Einlegen des Rückwärtsganges ansynchronisiert wird, an axial entgegengesetzten Enden der Reihe liegen.

9. Schaltanordnung nach einem der Ansprüche 1 - 8, **dadurch gekennzeichnet, daß** die Schaltanordnung (40) Rückstellmittel (90; 96; 102; 112) aufweist, die das Bremselement (70; 100; 104; 110) nach dem Ansynchronisieren und dem Lösen der Halteeinrichtung (78) wieder in die Ausgangsstellung zurückstellen.

10. Schaltanordnung nach Anspruch 9, **dadurch gekennzeichnet, daß** die Rückstellmittel (96; 102; 112) an dem Bremselement (70; 100; 110) angreifen.

11. Schaltanordnung nach Anspruch 9 oder 10, **dadurch gekennzeichnet, daß** die Rückstellmittel (90) an dem Ansynchronisierungs-Schaltelement (48) oder im Bereich einer Verbindung zwischen dem Ansynchronisierungs-Schaltelement (48) und der Ansynchronisierungs-Schaltkupplung (26) angreifen.

12. Schaltanordnung nach Anspruch 11, **dadurch gekennzeichnet, daß** die Rückstellmittel (90) durch eine Schaltstangenarretierung (90) gebildet sind.

## Claims

1. Gearshift mechanism (40) for engaging the reverse gear (R) of a spur-gear transmission (16) for motor vehicles, which has multiple synchromesh forward gears (1-5) and the reverse gear (R), with a gearshift lever shaft (42), which is displaceable in an axial direction for selection movements (56) and is rotatable for shift movements (58), a shift finger element (44), which according to the selected axial position carries along a respective shift element (48, 50, 52) in a peripheral direction for the actuation of one or two clutches (26, 28), being connected to the gearshift lever shaft (42), and at least one brake element (70), which is supported on the gearshift lever shaft (42) and is arranged so that on actuation of one clutch (28) for engagement of the reverse gear (R) it synchronizes another clutch (26), so as to permit engagement of the reverse gear (R) with the minimum possible speed differential on the associated clutch (28), the reverse gear (R) being situated in the same shift lane as a further gear (5), the brake element (70; 100; 104; 110) being rotatably supported on the gearshift lever shaft (42), and a force-locked retaining device (78) being arranged between the gearshift lever shaft (42) and the brake element (70; 100; 104; 110), so that the synchronization is force-controlled by means of the force-locked retaining device (78) until the retaining device (78) is released, the retaining device (78) being formed by a detent device (78), which serves to latch the brake element (70) onto the gearshift lever shaft (42) and which has a detent element (84), **characterized in that** a peripheral groove (88), the shape of which is matched to the detent element (84) is provided on an inner peripheral section of the brake element (70; 100; 104; 110), in such a way that only a slight opposing force has to be overcome when shifting into the further gear (5).

2. Gearshift mechanism according to Claim 1, **characterized in that** the brake element (70; 100; 104; 110) is arranged so that on engagement of the reverse gear (R) it synchronizes the clutch (26) for the 2^{nd} gear.

3. Gearshift mechanism according to Claim 1 or 2, **characterized in that** the gearshift mechanism (40) has at least one locking element (60), which mechanically blocks the actuation of shift elements (48, 50, 52), which owing to the prevailing axial position of the gearshift lever shaft (42) are not selected.

4. Gearshift mechanism according to Claim 3, **characterized in that** the locking element (60) is supported so that it is axially displaceable on a housing and is carried along by axial movements of the gearshift lever shaft (42).

5. Gearshift mechanism according to Claim 3 or 4, **characterized in that** the locking element (60) has a groove (61), in order to allow actuation of the synchronization clutch (26).

6. Gearshift mechanism according to Claim 5, **characterized in that** the groove (61) is of dimensions such that the positive interlocking of the synchronization clutch (26) is precluded if the clutch (28) for the reverse gear (R) is selected.

7. Gearshift mechanism according to any one of Claims 3 to 6, **characterized in that** the brake element (70; 100; 104; 110) is supported on the gearshift lever shaft (44) between the shift finger element (44) and the locking element (60).

8. Gearshift mechanism according to any one of Claims 1 to 7, **characterized in that** the shift elements (48, 50, 52) form a row in an axial direction and that the shift element (52) for the reverse gear (R) and the shift element for the gear (2), which is synchronized on engagement of the reverse gear, are situated at axially opposite ends of the row.

9. Gearshift mechanism according to any one of Claims 1 to 8, **characterized in that** the gearshift mechanism (40) has return means (90; 96; 102; 112), which after synchronization and the release of the retaining device (78) return the brake element (70; 100; 104; 110) into the initial position.

10. Gearshift mechanism according to Claim 9, **characterized in that** the return means (96; 102; 112) act on the brake element (70; 100; 110).

11. Gearshift mechanism according to Claim 9 or 10, **characterized in that** the return means (90) act on the synchronization shift element (48) or in the area of a connection between the synchronization shift element (48) and the synchronization clutch (26).

12. Gearshift mechanism according to Claim 11, **characterized in that** the return means (90) are formed by a gearshift lever rod arresting mechanism (90).

## Revendications

1. Dispositif de commande (40) pour engager la marche arrière (R) d'une boîte de vitesses à pignons droits (16) pour des véhicules à moteur, qui comprend plusieurs rapports de marche avant (1-5) synchronisés et le rapport de marche arrière (R), comportant un arbre de commande (42), qui peut être déplacé dans le sens axial pour des mouvements de sélection (56) et qui est apte à tourner pour des mouvements de commande (58), un doigt de commande (44) étant relié à l'arbre de commande (42), lequel doigt, en fonction de la position axiale sélectionnée, entraîne dans le sens périphérique un élément de commande (48, 50, 52) correspondant pour actionner un ou deux embrayages (26, 28), et au moins un élément de freinage (70), qui est monté sur l'arbre de commande (42) et qui est agencé de telle sorte que, lors d'un actionnement d'un embrayage (28) pour engager la marche arrière (R), il engage la synchronisation d'un autre embrayage (26), afin de pouvoir passer la marche arrière (R) en présence d'une différence de vitesse de rotation aussi faible que possible, la marche arrière (R) se situant dans la même voie de commande qu'un rapport de vitesse supplémentaire (5), l'élément de freinage (70 ; 100 ; 104 ; 110) étant monté rotatif sur l'arbre de commande (42), et de telle sorte qu'un dispositif de retenue (78) par friction est disposé entre l'arbre de commande (42) et l'élément de freinage (70 ; 100 ; 104 ; 110), de telle sorte que la synchronisation est commandée moyennant une force par l'intermédiaire du dispositif de retenue (78) par friction, jusqu'à ce que le dispositif de retenue (78) soit libéré, le dispositif de retenue (78) étant formé par un dispositif de blocage (78), au moyen duquel l'élément de freinage (70) est bloqué sur l'arbre de commande (42) et qui comporte un élément de blocage (84),
**caractérisé en ce que**
sur une partie du pourtour intérieur de l'élément de freinage (70 ; 100 ; 104 ; 110) est prévue une rainure périphérique (88), dont la forme est ajustée à l'élément de blocage (84), de telle sorte que seulement une faible force complémentaire doit être surmontée lors du passage dans le rapport de vitesse supplémentaire (5).

2. Dispositif de commande selon la revendication 1, **caractérisé en ce que** l'élément de freinage (70 ; 100 ; 104 ; 110) est agencé de telle sorte que, lors du passage de la marche arrière (R), il engage la synchronisation de l'embrayage (26) pour le deuxième rapport de vitesse.

3. Dispositif de commande selon la revendication 1 ou 2, **caractérisé en ce que** le dispositif de commande (40) comporte au moins un élément de verrouillage (60), qui verrouille mécaniquement l'actionnement d'éléments de commande (48, 50, 52) qui, en raison de la position axiale respective de l'arbre de commande (42), n'ont pas été sélectionnés.

4. Dispositif de commande selon la revendication 3, **caractérisé en ce que** l'élément de verrouillage (60) est monté mobile dans le sens axial sur un carter et est entraîné en cas de mouvements axiaux de l'arbre de commande (42).

5. Dispositif de commande selon la revendication 3 ou 4, **caractérisé en ce que** l'élément de verrouillage (60) comporte une rainure (61) pour autoriser l'actionnement de l'embrayage de synchronisation (26).

6. Dispositif de commande selon la revendication 5, **caractérisé en ce que** la rainure (61) est dimensionnée de telle sorte que la réalisation de l'accouplement craboté de l'embrayage de synchronisation (26) est exclue lorsque l'embrayage (28) est sélectionné pour le rapport de marche arrière (R).

7. Dispositif de commande selon l'une des revendications 3 à 6, **caractérisé en ce que** l'élément de freinage (70 ; 100 ; 104 ; 110) est monté sur l'arbre de commande (42) entre le doigt de commande (44) et l'élément de verrouillage (60).

8. Dispositif de commande selon l'une des revendications 1 à 7, **caractérisé en ce que** les éléments de commande (48, 50, 52) sont alignés dans la direction axiale en formant une rangée et **en ce que** l'élément de commande (52) pour le rapport de marche arrière (R) et l'élément de commande pour le rapport de vitesse (2), qui est synchronisé lors du passage de la marche arrière, sont situés aux extrémités axialement opposées de ladite rangée.

9. Dispositif de commande selon l'une des revendications 1 à 8, **caractérisé en ce que** le dispositif de commande (40) comporte des moyens de rappel (90 ; 96 ; 102 ; 112) qui, après la synchronisation et la libération du dispositif de retenue (78), ramènent l'élément de freinage (70 ; 100 ; 104 ; 110) dans la position initiale.

10. Dispositif de commande selon la revendication 9, **caractérisé en ce que** les moyens de rappel (96 ; 102 ; 112) viennent en prise sur l'élément de frein (70 ; 100 ; 110).

11. Dispositif de commande selon la revendication 9 ou 10, **caractérisé en ce que** les moyens de rappel (90) viennent en prise sur l'élément de commande de synchronisation (48) ou dans la zone d'une liaison entre l'élément de commande de synchronisation (48) et l'embrayage de synchronisation (26).

12. Dispositif de commande selon la revendication 11, **caractérisé en ce que** les moyens de rappel (90) sont formés par un élément d'arrêt (90) de la tige de sélection.
